# EUROPEAN PATENT SPECIFICATION

(11) **EP 3 042 061 B1**
(45) Date of publication and mention of the grant of the patent: **03.11.2021**
(21) Application number: 14841820.5
(22) Date of filing: 05.09.2014
(51) Int. Cl.: F02D 17/00, F02D 17/02, F01N 3/20, F01N 11/00

(54) **THERMAL MANAGEMENT OF EXHAUST GAS VIA CYLINDER DEACTIVATION**
WÄRMEVERWALTUNG VON ABGAS ÜBER ZYLINDERABSCHALTUNG
GESTION THERMIQUE DE GAZ D'ÉCHAPPEMENT PAR LE BIAIS D'UNE DÉSACTIVATION DE CYLINDRE

(30) Priority: 06.09.2013 US 201361874868 P
(43) Date of publication of application: 13.07.2016
(73) Proprietor: Cummins Inc., Columbus, IN 47201 (US)
(72) Inventor: NORRIS, Colin, L., Columbus, Indiana 47201 (US); AFOLABI, Olusola, Columbus, Indiana 47201 (US); MEHROTRA, Abhishek, Columbus, Indiana 47201 (US); EDWARDS, Ward, R., Columbus, Indiana 47203 (US); LUTZ, Timothy, P., Columbus, Indiana 47203 (US); REYNOLDS, David, Joseph, Memphis, Indiana 47143 (US); BENTLEY, Gregory, Greenwood, Indiana 46143 (US); GOJE, Amit, Columbus, Indiana 47201 (US); RAMAMOORTHY, Balakrishnan, Columbus, Indiana 47201 (US); SINGH, Jagdeep, I., Columbus, Indiana 47201 (US)
(74) Representative: Roberts, Peter David
(86) International application number: PCT/US2014/054241
(87) International publication number: WO 2015/035133

(56) References cited:
- EP-A1- 2 115 282
- EP-A2- 1 234 959
- CN-A- 108 457 724
- DE-A1- 3 108 374
- JP-A- H0 979 057
- JP-B2- 5 030 028
- US-A- 5 195 485
- US-A1- 2002 170 527
- US-A1- 2003 110 762
- US-A1- 2003 172 900
- US-A1- 2005 193 721
- US-A1- 2005 205 074
- US-A1- 2005 280 263
- US-A1- 2006 107 655
- US-A1- 2009 150 055
- US-A1- 2009 150 059
- US-A1- 2009 292 439
- US-A1- 2010 287 913
- US-A1- 2011 146 269
- US-A1- 2011 162 608
- US-A1- 2012 046 853
- US-A1- 2013 055 972
- US-A1- 2013 167 528
- US-B2- 7 981 174
- US-B2- 8 336 298

## Description

### BACKGROUND

Emissions regulations for internal combustion engines have become more stringent over recent years. For example, the Environmental Protection Agency of the United States has been phasing in stricter emissions standards regarding hydrocarbon, particulate matter, and nitrogen oxide emissions for the last few years and will continue to do so. Environmental concerns have motivated the implementation of these stricter emission requirements for internal combustion engines throughout much of the world.

Many engine manufacturers have developed extensive aftertreatment systems that work to 'clean-up' the exhaust gas emitted from combustion cylinders so that the constituents of the exhaust gas leaving the tailpipe of an engine system (e.g., a vehicle or a generator) comply with the emissions standards. Filters and catalysts have been implemented, for example, to trap particulate matter, oxidize hydrocarbons, and reduce nitrogen oxides. However, many of these aftertreatment components are highly temperature dependent such that they are much more effective when maintained at a certain temperature.

When the temperature of the aftertreatment system is too low, several negative consequences may occur. First, the general efficiency and effectiveness of the aftertreatment system will diminish and emissions from the tailpipe may contain excessive amounts of harmful pollutants. Additionally, these pollutants, before exiting the aftertreatment system, may adsorb onto the surface of the various components (the filters and catalysts), thus reducing the active and effective surface area of those components. For example, a reduction catalyst may become clogged with adsorbed hydrocarbons. The adsorption of pollutants onto the various components of an aftertreatment system not only decreases the effectiveness of the system, but the clogged components may require repeated 'regeneration' procedures that require extra time and fuel. For example, a user may have to wait, without using the engine for a desired purpose, while the regeneration process occurs. Still further, adsorbed pollutants on the aftertreatment components, such as hydrocarbons adsorbed on a selective reduction catalyst, may eventually and suddenly burn off when the temperature of the system rises, thus resulting in an exothermic chain reaction that causes drastic temperature increases that can potentially damage components of the system.

Whilst different to the subject-matter of the present disclosure, background art includes: US2002170527, US2005205074, and US2005193721.

US2002170527 describes an engine control system in a vehicle including a variable displacement internal combustion engine, an intake manifold coupled to the variable displacement internal combustion engine, a controller for controlling the displacement of the variable displacement internal combustion engine, a pressure sensor sensing manifold pressure, the pressure sensor electronically coupled to the controller, and where the controller receives pressure information from the pressure sensor and changes the displacement of the variable displacement internal combustion engine in response to the pressure information.

US2005205074 describes a system and method to control engine valve timing to improve air-fuel control in an engine with valves that may be deactivated. Valves that may be deactivated are controlled in a manner to improve detection of individual cylinder air-fuel ratios.

US2005193721 describes systems and methods for carrying out combustion in a fuel-cut operation in some or all of the engine cylinders of a vehicle. Further, various subsystems are described, such as fuel vapor purging, air-fuel ratio control, engine torque control, catalyst design, and exhaust system design.

### SUMMARY

The subject matter of the present disclosure has been developed in response to the present state of the art. Accordingly, the subject matter of the present disclosure has been developed to provide an apparatus and method for thermal management of an exhaust gas aftertreatment system via cylinder deactivation based on an engine operating state and the time within which the engine has been in that operating state.

One embodiment relates to an engine system according to claim 1. In one embodiment, the timing module determines a low load operating state existing for a certain period of time and generates a cylinder request to deactivate a portion of the combustion cylinders. In turn, the activated cylinders increase their power output to compensate for the deactivated cylinders which lead to an increase in combustion temperatures and, therefore, exhaust gas temperatures. The increased exhaust gas temperatures substantially prevent particulate matter accumulation, ammonia accumulation, hydrocarbon formation, and other unwanted effects in the exhaust aftertreatment system that may occur when the exhaust gas temperatures are relatively low.

Still another embodiment relates to method according to claim 11.

The described features, structures, advantages, and/or characteristics of the subject matter of the present disclosure may be combined in any suitable manner in one or more embodiments and/or implementations. In the following description, numerous specific details are provided to impart a thorough understanding of embodiments of the subject matter of the present disclosure. One skilled in the relevant art will recognize that the subject matter of the present disclosure may be practiced without one or more of the specific features, details, components, materials, and/or methods of a particular embodiment or implementation. In other instances, additional features and advantages may be recognized in certain embodiments and/or implementations that may not be present in all embodiments or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific embodiments that are illustrated in the appended drawings. Understanding that these drawings depict only typical embodiments of the subject matter and are not therefore to be considered to be limiting of its scope, the subject matter will be described and explained with additional specificity and detail through the use of the drawings, in which:
FIG. 1 is a schematic block diagram of a controller apparatus for changing the temperature and hydrocarbon content of an exhaust gas stream, according to one embodiment;
FIG. 2 is a schematic block diagram of an engine system for changing the temperature and hydrocarbon content of an exhaust gas stream, according to one embodiment;
FIG. 3 is a schematic block diagram of an engine system for changing the temperature and hydrocarbon content of an exhaust gas stream, according to another embodiment;
FIG. 4 is a chart showing the temperature and hydrocarbon content of an exhaust gas stream, according to one embodiment; and
FIG. 5 is a schematic flow chart diagram of a method for changing the temperature and hydrocarbon content of an exhaust gas stream, according to another embodiment.

### DETAILED DESCRIPTION

Reference throughout this specification to features, advantages, or similar language does not imply that all of the features and advantages that may be realized with the subject matter of the present disclosure should be or are in any single embodiment of the subject matter. Rather, language referring to the features and advantages is understood to mean that a specific feature, advantage, or characteristic described in connection with an embodiment is included in at least one embodiment of the subject matter of the present disclosure. Thus, discussion of the features and advantages, and similar language, throughout this specification may, but do not necessarily, refer to the same embodiment.

As described above, conventional aftertreatment systems have been implemented with many engine systems to reform exhaust gas emitted from the combustion cylinders. However, when the temperature of the aftertreatment system falls below a certain threshold, the engine system is plagued with various problems, as discussed above. Specifically, the effectiveness of the aftertreatment system decreases, hydrocarbon pollutants adsorb and build-up on the surface of the aftertreatment components, and the potential for destructive exothermic chain reactions increases. These problems are most prevalent when the engine is running in light load operation, which results in a comparatively lower exhaust gas temperature. The present disclosure relates to a controller apparatus, a system, and a method for managing the temperature of the exhaust gas via cylinder deactivation/reactivation. Throughout the present disclosure, many details are included referring to *deactivating* combustion cylinders to increase exhaust gas temperature (see below). As used herein, when one or more combustion cylinders are deactivated, the engine is operating in a combustion cylinder deactivation mode.

Although not discussed in as much detail, the same general principles apply for *reactivating* the deactivated combustion cylinders. For example, if the demand placed on the engine exceeds what the engine with deactivated cylinders is able to generate, then the controller, system, and method of the present disclosure may also be implemented to reactivate the cylinders. At which point, the engine is operating in a normal operation mode (i.e., no combustion cylinder deactivations).

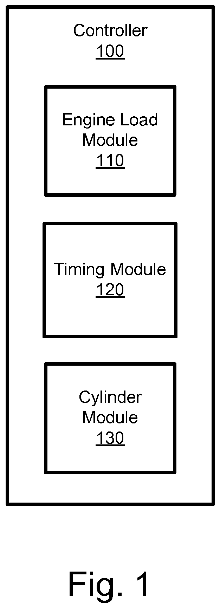

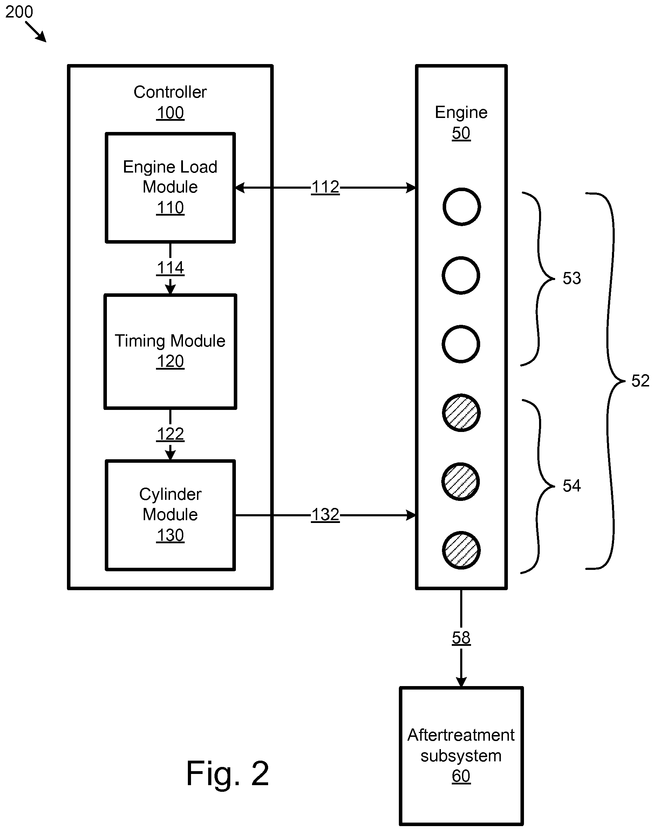

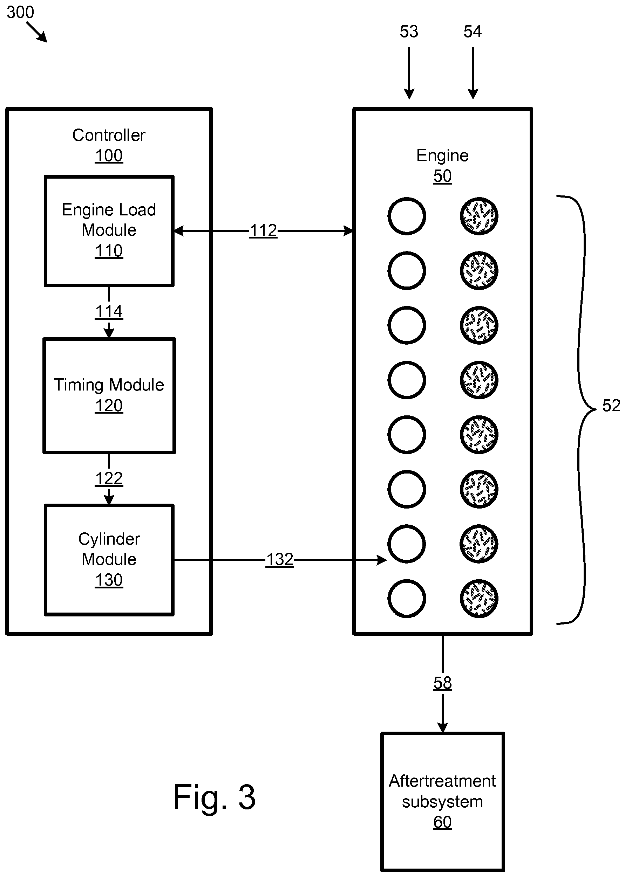

FIG. 1 is a schematic block diagram of a controller apparatus 100 for changing the temperature and hydrocarbon content of an exhaust gas stream, according to one embodiment. Generally speaking, the present disclosure relates to using engine cylinder deactivation to alter the thermal properties of the exhaust gas, thus diminishing the problems discussed above. Accordingly, the controller apparatus 100 includes an engine load module 110, a timing module 120, and a cylinder module 130. The engine load module 110 and the timing module 120 are described below with reference to FIG. 2 and the cylinder module 130 is described below with reference to FIGS. 2 and 3.

FIG. 2 is a schematic block diagram of an engine system 200 for changing the temperature and hydrocarbon content of an exhaust gas stream 58, according to one embodiment. The system 200 includes a controller 100, an engine 50 with a plurality of combustion cylinders 52, and an aftertreatment subsystem 60. The controller 100, as described above, includes an engine load module 110, a timing module 120, and a cylinder module 130. The engine 50 depicted in FIG. 2 is a six cylinder inline engine that has three active cylinders 53 and three deactivated cylinders 54. Although specific examples of certain engines are depicted in the Figures, the engine 50 of the present disclosure may be any internal combustion engine, such as a spark-ignited gasoline automobile engine, a diesel engine, a dual-fuel engine, a power generator engine, etc. The engine 50, according to one embodiment, has an even number of cylinders and the cylinders can be arranged in a line, as depicted in FIG. 2, or arranged in a v-formation (e.g., V-8, V-12, V-16, etc.), as depicted in FIG. 3. In other embodiments, the combustion cylinders in an internal combustion engine may be arranged in any type of configuration (e.g., a W-formation).

The aftertreatment subsystem 60 is structured to receive exhaust gas from the engine 50 and reduce the pollutants (e.g., nitrogen oxides, particulate matter, hydrocarbons, etc.) in the exhaust gas to thereby expel a relatively less pollutant exhaust gas into the environment. The aftertreatment subsystem 60 may include a variety of components. For example, the aftertreatment subsystem 60 may include a particulate filter, an oxidation catalyst, and a selective reduction catalyst, among other components. As described above, the activity and effectiveness of the various components are often highly dependent on temperature. At relatively higher temperatures (e.g., greater than 500 degrees Celsius), the following events tend to occur: ammonia, used to reduce nitrogen oxide (NOx) emissions to NO₂ and other less harmful products, is decomposed (e.g., burned off from the higher temperatures); NOx conversion to less harmful products, such as NO₂, increases; accumulated particulate matter is more likely to be regenerated (e.g., burned away); and the rate at which hydrocarbon, particulate matter, and/or water is collected or adsorbed by the system is reduced. At relatively lower exhaust gas temperatures (e.g., less than 250 degrees Celsius), ammonia is less likely to be decomposed; particulate matter, hydrocarbons, and water are more likely to collect within the system; and NOx conversion efficiency decreases. Thus, the successful and efficient conversion of harmful pollutants exiting the cylinders 52 of the engine 50 as exhaust gas 58 into non-toxic chemicals, such as water vapor, carbon dioxide, and nitrogen, is largely dependent on the temperature of the exhaust gas stream 58 itself. The modules 110, 120, 130 of the controller 100 are configured to control the exhaust gas temperature via cylinder deactivation.

The engine load module 110 interacts with the engine 50 to determine an engine operating state 112. The engine operating state 112 may include any information relating to the operating condition of the engine 50. For example, the engine load module 110 may interact with detectors and/or sensors to monitor the speed ― revolutions-per-minute (RPM) ― of the engine. In one embodiment, the engine load module 110 may also detect other operating variables, such as fuel rail pressure, charge flow, injection timing, etc. In another embodiment, the engine load module 110 may not use physical or actual measuring devices but may instead receive information from the main electronic control module of the engine. For example, torque demands, acceleration demands, torque limits, and other requests from the main electronics control module may be received by the engine load module 110 to determine the engine operating state 112. In a further embodiment, the engine load module 110 may be configured to continually and periodically take measurements or receive information. In another embodiment, the engine load module 110 may be configured to only monitor the engine conditions when a user has indicated such monitoring via a user interface.

The engine operating state 112 may include a low load operating condition of the engine 50. The low load operating condition may indicate that at least one of an engine torque and an engine speed (actual or demanded) are below a preset threshold. In another embodiment, the low load operating condition may indicate that the load on the engine itself (measured, determined, estimated, etc.) is below a preset threshold. Based on the engine used, the preset thresholds are likely to vary application-to-application. As mentioned above, values indicative of a low load operating state (e.g., engine speed, engine torque, load itself) may be measured, determined via one or more algorithms, processes, models, look-up tables, and/or otherwise estimated based on operation of the engine. In addition to engine torque, engine speed, and the load itself, other operating conditions may also be used to indicate that the engine is in a low load operating condition. In one embodiment, the gear or transmission setting may be used to indicate a low load operating state. For example, if the transmission setting is neutral, the engine load module 110 may determine that the engine is in a low load operating condition. In another embodiment ― a vehicle embodiment, if the vehicle speed is below a preset threshold (e.g., 5 miles-per-hour, 8 km/h), the engine load module 110 may determine that the engine is in a low load operating condition. In still another embodiment, the engine load module 110 module may receive the fueling commands for the engine 50 and determine the engine is in a low load operating state based on the fueling commands. For example, if the fueling rate and/or amount are below a threshold. In still other embodiments, a combination of the aforementioned parameters (and others) may be used to determine that the engine is in a low load operating condition. For example, the speed of the engine 50, the injection timing, and the rate of fuel delivery into the combustion cylinders 52, may collectively indicate a low load operating condition. According to another embodiment, the engine load module 110 may indicate a 'low load' status 114 that is based solely on, for example, one parameter (e.g., when the engine is operating at lower than 700 RPM). Thus, many parameters may be used to indicate a low load operating condition with such designations being configurable based on the application. Accordingly, it should be also understood that many other parameters may also be used to indicate a low load operating condition.

In addition to a low load operating condition, the engine operating state 112 may also include 'medium' and/or 'high load' operating conditions (and any operating condition there between; thus, a spectrum may be used in some embodiments). Like the low load operating condition, the medium and/or high load operating conditions may be demarcated based on preset thresholds using one or more parameters like that described above. For example: engine speeds greater than 1,200 RPM may indicate a high load condition; engine torques between 250 pound-foots (339 N.m) and 400 pound-foots (542 N.m) may indicate a medium load condition; engine loads greater than 250 horsepower (186kW) may indicate a high load condition; etc. The values used above are for example purposes only. Based on the application, these values are likely to change such that many different thresholds may be used to indicate operating states of the engine 50.

The engine load module 110 is also structured to generate an engine status report 114 that is sent to the timing module 120 (described below). The engine status report 114 may include interpretations, analyses, and the like based on the engine operating state 112. Thus, the engine status report 114 describes a determination of the current load placed on the engine 50, whether actual or demanded. As described above, the description of the current load may be based on a variety of different parameters that, in some embodiments, are compared against preset thresholds indicative of an operating state, such as a low load operating state (e.g., the fueling rate/amount is below a threshold, the engine torque is below a threshold, etc.). The threshold designations may be based on the application and configurable (e.g., a user may set certain operating conditions that when experienced, indicate a certain operating state of the engine).

In certain other embodiments, the controller 100 may also include an aftertreatment condition module that functions in a similar manner as the engine load module 110. But, instead of receiving/detecting information about the operation of the engine (e.g., engine operating state 112), the aftertreatment condition module receives/detects information about the operation of the aftertreatment subsystem 60. For example, the aftertreatment module may monitor component surface temperatures, catalyst bed temperatures, fluid flow temperatures, etc. Based on the monitoring, the aftertreatment condition module may generate an aftertreatment status report, instead of an engine status report 114, which is sent to the timing module 120. If one or more of the temperatures are below a threshold for a certain amount of time, the controller 100 may generate a command to initiate a combustion cylinder deactivation mode (and, in some embodiments, provide one or more other thermal management commands) to increase the exhaust gas temperature. This structure and functionality is analogous to that of the engine load module 110, timing module 120, and cylinder module 130 but is instead focused on the aftertreatment system itself. The aftertreatment module, like described above, may be used to complement the function and structure of the controller 100 to aid efficient operation of the aftertreatment system. Accordingly, some embodiments may include this aftertreatment condition module while others may not.

The timing module 120 is structured to receive the engine status report 114 from the engine load module 110. Based on the engine status report 114, the timing module 120 generates a cylinder request 122 that is provided to the cylinder module 130. The timing module 120 is structured to determine when, if at all, cylinder activation/deactivation should be implemented (e.g., when combustion cylinder deactivation mode should be initiated). The timing module 120 monitors the period of time during which the engine 50 is operating under a certain status (i.e., in a certain state). For example, the engine status report 114 may indicate that the engine 50 is currently operating under a 'low load' condition. The timing module 120 receives such information and begins a timer to monitor how long the engine has been operating in such a condition. If the timing module 120 determines the engine 50 has been under a certain operating condition for a certain period of time, the timing module 120 may then generate a cylinder request 122 to be sent to the cylinder module 130.

In one embodiment, the cylinder request 122 calls for a portion 54 of the combustion cylinders 52 to be deactivated. The portion requested to be deactivated may be based on the engine configuration (e.g., inline, v-formation, etc.) and may be configurable. In one embodiment, a default deactivation strategy may be fifty percent of the combustion cylinders. For example, in a sixteen cylinder engine, the number of cylinders deactivated may be eight cylinders. In other embodiments, greater than or less than half of the combustion cylinders may be requested to be deactivated. In the sixteen cylinder engine, for example, two, four, six, eight, ten, etc., cylinders may be deactivated depending on the specifics of a given application.

The cylinder request 122 may be based upon a predetermined or a configurable timing variable. In other words, the timing module 120 may include predetermined timing parameters pertaining to each different operating status 114 of the engine 50. For example, if the status report 114 indicates that the engine is in 'low load' operation for a certain time period (as determined or timed by the timing module 120), the timing module 120 may then send a request 122 to the cylinder module 130 to deactivate a portion of the combustion cylinders. In one embodiment, the certain time period may be zero seconds. Thus, if the engine status report 114 indicates a certain condition (i.e., 'low load'), the timing module 120 may immediately request a portion of the cylinders to deactivate. In another embodiment, the certain time period may be greater than zero seconds, such as 30 seconds. In yet another embodiment, the certain time period may be a matter of minutes or longer (depending on the specific purpose/use of the engine). If the timing module 120 determines that a certain operating state (e.g., low load) has existed for that certain time period, the cylinder request 122 calls for a portion of the combustion cylinders to be deactivated.

In one embodiment, the certain time period may be configurable or programmable according to user input or may be application specific. For example, if a user is contemplating a situation where the engine will experience oscillating or constantly fluctuating demand, the user may set the time period for a longer time (e.g., thirty seconds) so as to not introduce cylinder deactivation prematurely (e.g., to avoid cylinder deactivation during transient events). In another embodiment, depending on the specific application of an engine, a technician may calibrate the timing module 120 to correspond with the dynamic conditions that the engine is expected to experience during the engine's operational lifetime. In yet another embodiment, the timing module may also take into consideration engine governors and secondary engine systems, such as upper and lower torque limits. For example, the timing module 120 may automatically and temporarily extend the certain time period to infinity (i.e., prevent cylinder deactivation) due to a low torque limit imposed upon the engine by a secondary engine system.

FIG. 3 is a schematic block diagram of an engine system 300 for changing the temperature and hydrocarbon content of an exhaust gas stream 58, according to another embodiment. As compared to FIG. 2, the engine 50 depicted in FIG. 3 is a V-16 engine and is shown with a portion/bank 53 of the cylinders 52 activated and another portion/bank 54 of the cylinders 52 deactivated. The cylinder module 130, as briefly mentioned above, receives a cylinder request 122 from the timing module 120. Generally, the cylinder request 122 indicates if/when cylinder deactivation/activation should take place. Once the cylinder module 130 receives a request 122 for cylinders to be deactivated, the cylinder module 130 generates a cylinder command 132 to implement the requested cylinder deactivation.

In one embodiment, the cylinder command 132 includes additional thermal management commands. The additional thermal management commands are structured to complement the cylinder deactivation mode and increase a temperature of the exhaust gas. The additional thermal management commands may include, but are not limited to, a valve actuation command that alters the opening and closing of a fuel valve or the opening and closing of the intake and exhaust valves in an engine; retarding an injection timing to ensure a relatively greater amount of compression and therefore temperature in the cylinder; internal hydrocarbon dosing; external hydrocarbon dosing; post injection of fuel after the combustion event in the cylinder; a wastegate opening to control a speed of the turbocharger; closing an intake throttle; closing an exhaust throttle; adjusting a turbocharger to increase restriction across a turbine; adjusting a turbocharger to lower a speed of the turbocharger; increasing a speed of the engine; and the like. The additional thermal management commands may also include other actuation instructions, such as altering the pushrod and/or camshaft dynamics, in order to prevent fuel flow into the deactivated cylinders 54. As briefly stated above, the additional thermal management commands included with the cylinder command 132 may also include actuation instructions relating to the still-active cylinders 53 as well. For example, in order to maintain the power supply, the cylinder command 132 may call for an increase in fuel to be injected into the still active cylinders 53 or for the RPM rate to increase. Other parameters, including those mentioned above, may also be adjusted, such as injection timing, and fuel injection pressure to increase the exhaust gas temperature. It should be understood that the aforementioned list is not meant to be limiting as other commands may also be included that are structured to increase the temperature of the exhaust gas.

In one embodiment, the rate of fuel injected into the active cylinders 53 is increased relative to the rate that was provided in a time period immediately preceding the deactivation request (i.e., when no cylinders were deactivated). In one embodiment, the rate of fuel injected is double what was originally being provided during a time period immediately preceding the deactivation request where no combustion cylinders were deactivated in order to meet the power demand/load placed on the engine. The time period preceding the deactivation request may be predefined and configurable. To ensure that operation of the engine continues smoothly when entering a cylinder deactivation mode, the time period may be relatively short (e.g., one minute). In other embodiments, a distance period may be used in place of the time period (e.g., past one mile, 1,61 km). In either configuration, the increase in fuel rate may correspond with the power output in the immediately preceding period. Thus, the power from the engine following the deactivation request may correspond with the power substantially needed right before the deactivation request. As such, when embodied in a vehicle, the operator may be relieved from feeling a change in operating conditions as the power output stays relatively constant. In another embodiment, the fueling rate may increase based on the number of cylinders deactivated relative to the total number of cylinders. For example, if fifty percent of cylinders are deactivated, the rate of fuel injected may double (i.e., (percent of cylinders deactivated) x 2); if forty percent of cylinders are deactivated, the fuel rate may be increased by eighty percent; etc. In this regard, the fuel rate injected is constant relative to the period immediately preceding the deactivation request. In another embodiment, the fuel rate may be adjusted to maintain the engine torque output relative to the engine torque output provided in the period immediately preceding the output request. An engine torque sensor may be utilized to ensure that fueling is increased until the current torque output from the engine reaches that of the period immediately preceding the request. The torque output from the preceding period may be an average experienced, a minimum, a median value, a maximum, and any other chosen parameter indicative of the torque of preceding period (e.g., most recently experienced prior to deactivation mode or most recently experienced torque level prior to the low load operating state being determined).

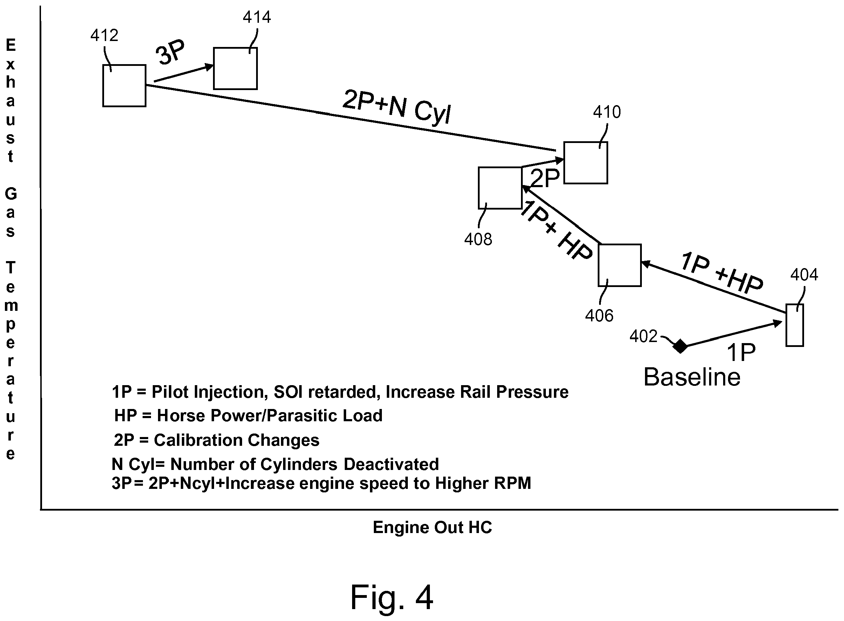

With a higher fuel injection rate in the still active cylinders 53, the temperature of the exhaust gas increases due to an increased chemical energy input (e.g., the fuel) that causes a higher power output with corresponding exhaust temperatures. This may result in the hydrocarbon content in the exhaust gas decreasing. In one embodiment, the decrease in the hydrocarbon content may be an indirect result caused by the increased temperature. In other words, as the temperature increases, any remaining hydrocarbons in the exhaust gas are oxidized, either in the combustion cylinders themselves or later in the exhaust conduits before reaching some of the aftertreatment components. FIG. 4 shows how the increased temperature decreases the hydrocarbon content in the exhaust gas stream 58.

In one embodiment, once the engine has been switched to a combustion cylinder deactivation mode, the cylinder module 130 may be configured to switch the referenced fuel table in a main electronic control module to a 'deactivated' cylinder fuel table. In one embodiment, there may be multiple fuel tables available for reference depending on the specifics of a given application and the details relating to the number of cylinders deactivated. Additionally, the cylinder module 130 may alternate which cylinders 52 are to be deactivated. For example, the cylinder module 130 may switch back and forth between which half of cylinders are deactivated each time a new cylinder request 122 is received from the timing module 120. In another embodiment, the cylinder module 130 may include a timing element of its own and may periodically and systematically switch the active cylinders without waiting for a request from the timing module 120. By switching/toggling the active bank of cylinders, the cylinders wear evenly, thus preventing any potential problems that may arise if one bank or one half of the cylinders is more frequently deactivated. As described above, the engine cylinders 52 may be in an inline configuration, a V configuration, or any other cylinder configuration (e.g., a W configuration). Accordingly, fuel tables corresponding with the active portion of combustion cylinders may be referenced by the cylinder module 130 to enable efficient operation of the engine.

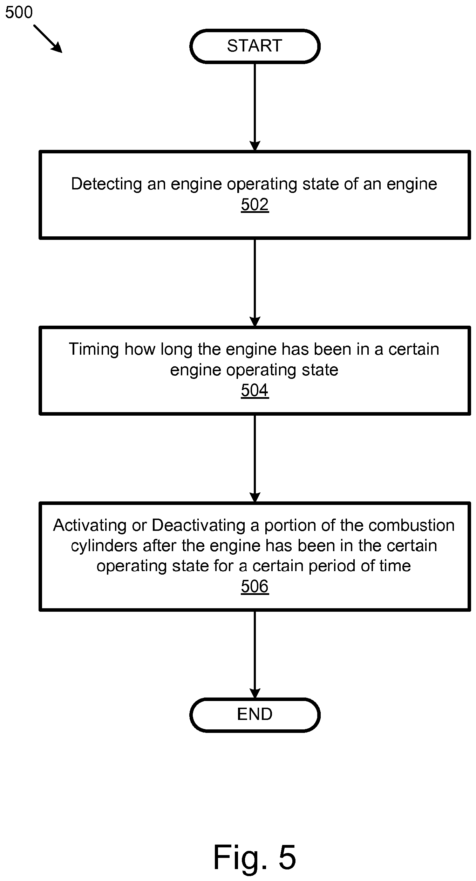

An example operation of the controller apparatus 100 may be described in regard to FIG. 5. As such, referring now to FIG. 5, FIG. 5 is a schematic flow diagram of a method 500 for changing the temperature an exhaust gas stream 58, according to one embodiment. Method 500 may be implemented with the controller 100 of FIGS. 1-3. Accordingly, method 500 may be explained with regard to the modules of the controller 100. To aid explanation of method 500, certain processes of method 500 may further be explained in regard to FIG. 4. FIG. 4 is a chart showing the temperature and hydrocarbon content of an exhaust gas stream 58 from an internal combustion engine, according to one embodiment.

At process 502, an engine operating state is detected. The engine operating state may correspond with a load experienced by the engine. In some embodiments, the operating state may include, but is not limited to, a low load operating condition, a medium load operation condition, and a high load operating condition. In other embodiments, a spectrum may be used that represents a gamut of for loads experienced by the engine. As described above, the operating state may be determined based on one or more operating parameters (e.g., engine torque, engine load (determined, measured, estimated, etc.), engine speed, fueling commands, etc.). The determined, measured, and/or estimated operating parameters may be compared against preset thresholds indicative of each operating state for the engine. In the example of FIG. 4, the engine load module 110 determines that the engine is operating in a low load condition. In FIG. 4, the low load operating condition is shown as baseline point 402.

After the operating state has been determined, at process 504, it is timed how long the engine has been in that operating state. This is performed by the timing module 120. In regard to FIG. 4, the timing module 120 has determined that the low load operating state has been present for a certain period of time (e.g., thirty seconds). Accordingly, at process 506, activating or deactivating a portion of combustion cylinders of the engine after the engine has been in the certain operating state for a certain period of time occurs. In regard to the example in FIG. 4, a low load operating state has been detected and has been occurring for a certain period of time. Because a low load operating state exists, at process 506, a portion of the combustion cylinders is deactivated ("N cylinders" as indicated by point 410 on FIG. 4). By deactivating a portion of combustion cylinders at the light or low load condition, the remaining (i.e., activated) cylinders are required to 'work' harder to maintain a similar power output. This may include increasing a fueling rate, a torque, a speed, etc. In turn, due to the extra 'work', the combustion temperatures increase which leads to an increase in an exhaust gas temperature. In some embodiments, the exhaust valve of the deactivated cylinders is also closed to prevent ambient air from mixing with the now-heated exhaust gas. Therefore, higher exhaust temperatures are achieved, which reduces particulate matter accumulation, NOx conversion inefficiency, and other potential harmful effects on the exhaust aftertreatment system.

In certain embodiments, switching of the activated/deactivated portion of the combustion cylinders may also occur during process 506, which corresponds with the cylinder deactivation mode. In turn, combustion cylinder wear may be spread relatively evenly amongst all the combustion cylinders. In one embodiment, switching is based on a time duration (e.g., every five seconds). As mentioned above, switching may also be based on when each cylinder request 122 is received, such that each request switches the combustion cylinders between activated and deactivated. Although only two switching strategies are described above, it should be understood that many switching strategies are possible.

Finally, a return to a normal operating mode (e.g., disengagement of the cylinder deactivation mode) may be based on a variety of parameters. This step may be included as part of process 506. One parameter may include a time duration. For example, there may be preprogrammed times for how long cylinder deactivation mode can last (e.g., ten minutes). Another parameter may be a change in operating conditions. For example, the engine load module 110 may continuously measure, estimate, or otherwise determine the load on the engine. If the load (or other parameter, such as fueling rate) indicates that a low load operating state is no longer present, the cylinder request 122 may be to return to normal operating mode because the exhaust gas temperatures may be likely or will be likely sufficient to prevent accumulation of particulate matter and other harmful effects that occur during low temperature exhaust gas situations. Still another parameter may be temperature measurements made in the exhaust gas aftertreatment system. In this embodiment, cylinder deactivation mode may continue until the temperature reaches a certain threshold. Although described as independent, these parameters may be also examined collectively. For example, the cylinder request 122 may be to continue cylinder deactivation mode until the temperature measurement in the exhaust gas reaches a certain threshold or the engine is no longer in a low load operating state, whichever occurs first. Thus, many parameters may be used to designate a return to normal operating mode.

Accordingly, referring back to FIG. 4, FIG. 4 depicts various stages or points in a deactivation procedure and the corresponding change in temperature (y-axis) and hydrocarbon content (x-axis). As mentioned above, at 402, the timing module 120 determines that the low load operating state has been occurring for a certain period of time. The timing module 120 provides a request to begin a combustion cylinder deactivation mode. The request is received by the cylinder module 130. In the example of FIG. 4, the cylinder module 130 has also provided additional thermal management commands at points 404-408. Additional thermal management commands may be provided to increase the exhaust gas temperatures. In some embodiments, cylinder deactivation mode may be activated immediately following the determination that a certain engine operating state has existed for a certain amount of time (i.e., process 504-506). In the example of FIG. 4, additional thermal management commands are included in the thermal management strategy in order to further increase the exhaust gas temperatures to promote (among other characteristics) efficient operation of the exhaust gas aftertreatment system. As shown, these commands include retarding injection timing, increasing the rail pressure (this applies to a common rail engine that use one rail to supply fuel to a plurality of injectors), and commanding post and pilot injections.

At point 410, the controller changes the engine calibration, which indicates that the fuel tables and any other commands (e.g., closing of deactivated combustion cylinder intake valves) are implemented (or are in the process of being implemented) to begin the cylinder deactivation mode. These commands correspond with commands to run the cylinder deactivation mode (e.g., an increase or decrease to a common rail pressure). In FIG. 4, cylinder deactivation mode is occurring from points 410-414. During cylinder deactivation mode, a portion of the combustion cylinders is deactivated (e.g., N cylinders). This portion may correspond with the engine type (e.g., 3 cylinders in a 6 cylinder engine). This portion may otherwise be a preset designation. In this example, engine speed is also increased to maintain power output and increase exhaust gas temperatures. The increase in power output is indicated in FIG. 4 by the "+ HP" (i.e., horsepower) designation. The increase in engine power output may be at least partly caused by the additional thermal management commands. As a result, the power output is increased relative to the starting low load in order to further help to increase exhaust gas temperatures (i.e., increasing power output increases engine torque, which increases fueling and combustion temperatures, which increases exhaust temperatures).

As shown in FIG. 4, increasing the exhaust gas temperature leads to a lower production of engine out hydrocarbons. This results in a relatively lesser amount of accumulation of hydrocarbons and other particulate matter in the exhaust gas aftertreatment system thereby leading to relatively more efficient operation of the aftertreatment system.

As mentioned above, at point 410, cylinder deactivation mode is commanded by the cylinder module 130. Point 410 corresponds with a particular exhaust gas temperature threshold on the y-axis. This exhaust gas temperature threshold may correspond with when cylinder deactivation mode is initiated after a certain engine operating condition (e.g., low load) has been detected for a certain amount of time. The exhaust gas temperature threshold may be preset based on the application (e.g., engine-aftertreatment system) and/or estimated/predicted/modeled using one or more look up tables, formulas, algorithms, and the like based on one or more pieces of engine operation data (e.g., fuel type, engine speed, engine torque, fuel-to-air ratio, etc.). In other embodiments, the exhaust gas temperature threshold may be determined in real time based on one or more engine parameters (e.g., below a temperature that causes or is likely to cause engine knock). Upon reaching this threshold, cylinder deactivation mode may be initiated by module 130. As mentioned above, the exhaust gas temperature threshold may vary for any engine-exhaust gas aftertreatment system combination, such that many temperature thresholds are possible based on the application.

According to one embodiment, thermal management commands are provided until the exhaust gas temperature threshold is reached (point 410 in FIG. 4). According to another embodiment, the additional thermal management commands may be provided for a certain period of time (e.g., a preset amount of time such as thirty seconds) prior to implementation of the cylinder deactivation mode. In still other embodiments, the additional thermal management commands may be provided until a threshold engine output power is reached. As such, the extent to which the additional thermal management commands are provided prior to activation of the cylinder deactivation mode is highly configurable. Moreover, in certain embodiments, the additional thermal management commands may continue to be provided during the cylinder deactivation mode.

As mentioned above, according to various other embodiments, cylinder deactivation mode may be initiated immediately after determining that a certain engine operating condition exists for a certain amount of time. In these instances, no threshold engine exhaust gas temperature preset may be used. As such, any additional thermal management commands may be used to increase the rate at which the exhaust gas temperatures rise without regard to an exhaust gas temperature threshold. All such variations are intended to fall within the spirit and scope of the present disclosure.

It should be understood that FIG. 4 represents a specific example implementation for the controller 100 and method 500. In some embodiments, more, less, or no additional thermal management commands may be utilized. Similarly, the designation of a low load operating state may also differ. Accordingly, many implementations of the controller 100 are possible.

In the above description, certain terms may be used such as "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

Reference throughout this specification to "one embodiment," "an embodiment," or similar language means that a particular feature, structure, or characteristic described in connection with the embodiment is included in at least one embodiment of the subject matter of the present disclosure. Appearances of the phrases "in one embodiment," "in an embodiment," and similar language throughout this specification may, but do not necessarily, all refer to the same embodiment. Similarly, the use of the term "implementation" means an implementation having a particular feature, structure, or characteristic described in connection with one or more embodiments of the subject matter of the present disclosure, however, absent an express correlation to indicate otherwise, an implementation may be associated with one or more embodiments.

The schematic flow chart diagrams included herein are generally set forth as logical flow chart diagrams. As such, the depicted order and labeled steps are indicative of one embodiment of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of computer readable program code may, for instance, comprise one or more physical or logical blocks of computer instructions which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of computer readable program code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. Where a module or portions of a module are implemented in software, the computer readable program code may be stored and/or propagated on in one or more computer readable medium(s).

The computer readable medium may be a tangible computer readable storage medium storing the computer readable program code. The computer readable storage medium may be, for example, but not limited to, an electronic, magnetic, optical, electromagnetic, infrared, holographic, micromechanical, or semiconductor system, apparatus, or device, or any suitable combination of the foregoing.

More specific examples of the computer readable medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store computer readable program code for use by and/or in connection with an instruction execution system, apparatus, or device.

The computer readable medium may also be a computer readable signal medium. A computer readable signal medium may include a propagated data signal with computer readable program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport computer readable program code for use by or in connection with an instruction execution system, apparatus, or device. Computer readable program code embodied on a computer readable signal medium may be transmitted using any appropriate medium, including but not limited to wireless, wireline, optical fiber cable, Radio Frequency (RF), or the like, or any suitable combination of the foregoing

In one embodiment, the computer readable medium may comprise a combination of one or more computer readable storage mediums and one or more computer readable signal mediums. For example, computer readable program code may be both propagated as an electro-magnetic signal through a fiber optic cable for execution by a processor and stored on RAM storage device for execution by the processor.

Computer readable program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The computer readable program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

## Claims

1. An engine system, comprising:
a plurality of combustion cylinders (52) in an engine (50);
an exhaust gas aftertreatment sub-system fluidly connected downstream of the plurality of combustion cylinders (52); wherein deactivating a portion of the combustion cylinders (53, 54) changes the temperature and hydrocarbon content of an exhaust gas stream in the exhaust gas aftertreatment sub-system;
an engine load module (110) structured to detect an engine operating state of an engine (50) and generate an engine status report (114);
a timing module (120) structured to receive the engine status report (114) and generate a cylinder request (122) after the engine (50) has been in a certain engine operating state for a certain period of time, wherein the timing module (120) is structured to determine that the engine (50) is operating in a low load operating condition for a certain period of time based on the engine status report (114), and wherein the cylinder request (122) generated by the timing module (120) includes deactivation of a portion of combustion cylinders (53) based on the low load operating condition existing for the certain period of time; and
a cylinder module (130) structured to receive the cylinder request (122) and generate a cylinder command (132) to be sent to the engine (50) to deactivate the portion of combustion cylinders (52) based on the engine operating state existing for the certain period of time, such that an exhaust gas temperature threshold corresponds with when cylinder deactivation mode is initiated after the certain engine operating condition has been detected for the certain period of time,
wherein the cylinder module (130) is structured to generate a cylinder command (132) to reactivate the deactivated portion of combustion cylinders (52) responsive to the engine status report (114) indicating that the engine (50) has been operating with a load greater than a preset threshold for a certain period of time, such that the engine (50) is operated with no deactivated cylinders (54), and the cylinder module (130) is structured to provide a thermal management command during the combustion cylinder deactivation mode to increase engine exhaust gas temperature, wherein the thermal management command is provided while the portion of combustion cylinders are deactivated such that the thermal management command complements the cylinder deactivation mode, and wherein the thermal management command includes at least one of retarding an injection timing, external hydrocarbon dosing, a post injection of fuel after the combustion event in the cylinder, a wastegate opening, a closing an intake throttle, a closing an exhaust throttle, and increasing a speed of the engine (50).

2. The engine system of claim 1, wherein the engine operating state includes a low load operating condition, wherein the low load operating condition indicates that at least one of an engine torque and an engine speed are below a preset threshold.

3. The engine system of claim 2, wherein the cylinder command (132) includes an increase in a fuel injection rate to only an activated portion of the combustion cylinders (52).

4. The engine system of claim 3, wherein the increase in the fuel injection rate is such that an engine torque output remains constant from a time period immediately preceding the deactivation request where no combustion cylinders (52) were deactivated.

5. The engine system of claim 1, wherein the cylinder module includes a timing element, wherein the timing element is structured to control switching between activated and deactivated combustion cylinders (53, 54) during a combustion cylinder deactivation mode such that all the combustion cylinders (52) wear evenly.

6. The engine system of claim 5, wherein the timing element controls switching between the activated and deactivated combustion cylinders (53, 54) based on a certain period of time.

7. The engine system of claim 1, wherein the certain period of time for the engine operating state existing is at least zero seconds or approximately thirty seconds.

8. The engine system of claim 1, wherein the cylinder command (132) includes an increase in a fuel injection rate to only an activated portion of the combustion cylinders (53).

9. The engine system of claim 8, wherein the increase in the fuel injection rate is double a rate that was provided during a time period immediately preceding the deactivation request where no combustion cylinders (50) were deactivated.

10. The engine system of claim 1,
wherein the plurality of combustion cylinders (52) are arranged in a v-formation, wherein during a deactivation mode, the cylinder request (122) is structured to deactivate a bank of combustion cylinders (53) for a certain period of time.

11. A method (500) comprising operating the engine system according to any of claims 1 to 10 to change the temperature and hydrocarbon content of an exhaust gas stream.

12. The method of claim 11, wherein the engine operating state includes a low load operating condition, wherein the low load operating condition indicates that a load on the engine (50) is below a preset threshold.

13. The method of claim 11, wherein the certain period of time is thirty seconds.

14. The method of claim 11, wherein the cylinder command (132) includes an increase in a fuel injection rate to only an activated portion of the combustion cylinders (54).

15. The method of claim 14, wherein the increase in the fuel injection rate is double a rate that was provided during a time period immediately preceding the deactivation request where no combustion cylinders (52) were deactivated.

## Patentansprüche

1. Motorsystem, Folgendes umfassend:
eine Vielzahl von Verbrennungszylindern (52) in einem Motor (50);
ein Abgasnachbehandlungs-Teilsystem, welches fluidisch im nachgelagerten Bereich der Vielzahl von Verbrennungszylindern (52) verbunden ist; wobei das Deaktivieren eines Teils der Verbrennungszylinder (53, 54) die Temperatur und den Kohlenwasserstoffgehalt eines Abgasstroms in dem Abgasnachbehandlung-Teilsystem ändert;
ein Motorlastmodul (110), welches strukturiert ist, um einen Motorbetriebsstatus eines Motors (50) zu erkennen und einen Motorstatusbericht (114) zu erzeugen;
ein Zeitgebermodul (120), welches strukturiert ist, um den Motorstatusbericht (114) zu empfangen und eine Zylinderanforderung (122) zu erzeugen, nachdem der Motor (50) in einem bestimmten Motorbetriebsstatus über einen bestimmten Zeitraum gewesen ist, wobei das Zeitgebermodul (120) strukturiert ist, um zu bestimmen, dass der Motor (50) über einen bestimmten Zeitraum in einem niederlastigen Betriebszustand arbeitet, basierend auf dem Motorstatusbericht (114), und wobei die Zylinderanforderung (122), welche durch das Zeitgebermodul (120) erzeugt wird, das Deaktivieren eines Teils der Verbrennungszylinder (53) einschließt, basierend auf dem über den bestimmten Zeitraum vorliegenden niederlastigen Betriebszustand; und
ein Zylindermodul (130), welches strukturiert ist, um die Zylinderanforderung (122) zu empfangen und einen Zylinderbefehl (132) zu erzeugen, welcher an den Motor (50) zum Deaktivieren des Teils der Verbrennungszylinder (52) gesendet werden soll, basierend auf dem über den bestimmten Zeitraum vorliegenden Motorbetriebsstatus in einer Weise, dass ein Abgastemperaturschwellenwert dem Zeitpunkt entspricht, an welchem der Zylinderdeaktivierungsmodus initiiert wird, nachdem der bestimmte Motorbetriebszustand über den bestimmten Zeitraum erkannt wurde,
wobei das Zylindermodul (130) strukturiert ist, um einen Zylinderbefehl (132) zum Reaktivieren des deaktivierten Teils der Verbrennungszylinder (52) in Reaktion auf den Motorstatusbericht (114) zu erzeugen, welcher angibt, dass der Motor (50) über einen bestimmten Zeitraum mit einer Last gearbeitet hat, welche größer als ein vorgegebener Schwellenwert ist, dergestalt, dass der Motor (50) ohne deaktivierte Zylinder betrieben wird (54), und
das Zylindermodul (130) strukturiert ist, um einen Wärmeverwaltungsbefehl während des Verbrennungszylinder-Deaktivierungsmodus bereitzustellen, um eine Motorabgastemperatur zu erhöhen, wobei der Wärmeverwaltungsbefehl bereitgestellt wird, während der Teil der Verbrennungszylinder deaktiviert ist in einer Weise, dass der Wärmeverwaltungsbefehl den Zylinderdeaktivierungsmodus ergänzt, und wobei der Wärmeverwaltungsbefehl mindestens eines von einer Verzögerung eines Einspritzzeitpunkts, einer externen Kohlenwasserstoffdosierung, einer Postinjektion von Brennstoff nach dem Verbrennungsereignis in dem Zylinder, einer Öffnung eines Abblaseventils, einer Schließung einer Einlassdrossel, einer Schließung einer Abgasdrossel und einer Erhöhung einer Motordrehzahl (50) umfasst.

2. Motorsystem nach Anspruch 1, wobei der Motorbetriebsstatus einen niederlastigen Betriebszustand einschließt, wobei der niederlastige Betriebszustand angibt, dass mindestens eines von einem Motordrehmoment und einer Motordrehzahl einen vorgegebenen Schwellenwert unterschreitet.

3. Motorsystem nach Anspruch 2, wobei der Zylinderbefehl (132) eine Erhöhung einer Brennstoffinjektionsrate an nur einem aktivierten Teil der Verbrennungszylinder (52) einschließt.

4. Motorsystem nach Anspruch 3, wobei die Erhöhung der Brennstoffinjektionsrate dergestalt ist, dass eine Motordrehmomentabgabe ab einem Zeitraum unmittelbar vor der Deaktivierungsanforderung, in dem keine Verbrennungszylinder (52) deaktiviert waren, konstant bleibt.

5. Motorsystem nach Anspruch 1, wobei das Zylindermodul ein Zeitgeberelement einschließt, wobei das Zeitgeberelement strukturiert ist, um eine Umschaltung zwischen aktivierten und deaktivierten Verbrennungszylindern (53, 54) während eines Verbrennungszylinderdeaktivierungsmodus dergestalt zu steuern, dass alle Verbrennungszylinder (52) sich einheitlich abnutzen.

6. Motorsystem nach Anspruch 5, wobei das Zeitgeberelement eine Umschaltung zwischen den aktivierten und den deaktivierten Verbrennungszylindern (53, 54) basierend auf einem bestimmten Zeitraum steuert.

7. Motorsystem nach Anspruch 1, wobei der bestimmte Zeitraum für den bestehenden Motorbetriebsstatus mindestens null Sekunde bis ungefähr dreißig Sekunden beträgt.

8. Motorsystem nach Anspruch 1, wobei der Zylinderbefehl (132) eine Erhöhung einer Brennstoffinjektionsrate an nur einem aktivierten Teil der Verbrennungszylinder (53) einschließt.

9. Motorsystem nach Anspruch 8, wobei die Erhöhung der Brennstoffinjektionsrate das Doppelte einer Rate beträgt, welche während eines Zeitraums unmittelbar vor der Deaktivierungsanforderung bereitgestellt wurde, in dem Verbrennungszylinder (50) deaktiviert waren.

10. System nach Anspruch 1, wobei die Vielzahl von Verbrennungszylindern (52) in einer v-Anordnung angeordnet ist, wobei, während eines Deaktivierungsmodus, die Zylinderanforderung (122) strukturiert ist, um eine Verbrennungszylinderbank (53) über einen bestimmten Zeitraum zu deaktivieren.

11. Verfahren (500), umfassend das Betreiben des Motorsystems nach einem der Ansprüche 1 bis 10 zum Ändern der Temperatur und des Kohlenwasserstoffgehaltes eines Abgasstroms.

12. Verfahren nach Anspruch 11, wobei der Motorbetriebsstatus einen niederlastigen Betriebszustand einschließt, wobei der niederlastige Betriebszustand angibt, dass eine Last an dem Motor (50) einen vorgegebenen Schwellenwert unterschreitet.

13. Verfahren nach Anspruch 11, wobei der bestimmte Zeitraum dreißig Sekunden beträgt.

14. Verfahren nach Anspruch 11, wobei der Zylinderbefehl (132) eine Erhöhung einer Brennstoffinjektionsrate an nur einem aktivierten Teil der Verbrennungszylinder (54) einschließt.

15. Verfahren nach Anspruch 14, wobei die Erhöhung der Brennstoffinjektionsrate das Doppelte einer Rate beträgt, welche während eines Zeitraums unmittelbar vor der Deaktivierungsanforderung bereitgestellt wurde, in dem keine Verbrennungszylinder (52) deaktiviert waren.

## Revendications

1. Système de moteur, comprenant :
une pluralité de cylindres de combustion (52) dans un moteur (50) ;
un sous-système de post-traitement de gaz d'échappement qui est connecté en termes de fluide en aval de la pluralité de cylindres de combustion (52) ; dans lequel la désactivation d'une partie des cylindres de combustion (53, 54) modifie la température et la teneur en hydrocarbure d'un flux de gaz d'échappement dans le sous-système de post-traitement de gaz d'échappement ;
un module de charge de moteur (110) qui est structuré pour détecter un état de fonctionnement de moteur d'un moteur (50) et pour générer un rapport d'état de moteur (114) ;
un module de temporisation (120) qui est structuré pour recevoir le rapport d'état de moteur (114) et pour générer une requête de cylindre (122) après que le moteur (50) a été dans un certain état de fonctionnement de moteur pendant une certaine période temporelle, dans lequel le module de temporisation (120) est structuré pour déterminer que le moteur (50) est en train de fonctionner dans une condition de fonctionnement à charge faible pendant une certaine période temporelle sur la base du rapport d'état de moteur (114), et dans lequel la requête de cylindre (122) qui est générée par le module de temporisation (120) inclut la désactivation d'une partie des cylindres de combustion (53) sur la base de la condition de fonctionnement à charge faible qui existe pendant la certaine période temporelle ; et
un module de cylindre(s) (130) qui est structuré pour recevoir la requête de cylindre (122) et pour générer une commande de cylindre (132) destinée à être envoyée sur le moteur (50) pour désactiver la partie de cylindres de combustion (52) sur la base de l'état de fonctionnement de moteur qui existe pendant la certaine période temporelle, de telle sorte qu'un seuil de température de gaz d'échappement corresponde à lorsqu'un mode de désactivation de cylindres est initié après que la certaine condition de fonctionnement de moteur a été détectée pendant la certaine période temporelle ;
dans lequel le module de cylindre(s) (130) est structuré pour générer une commande de cylindre (132) pour réactiver la partie désactivée de cylindres de combustion (52) en réponse au fait que le rapport d'état de moteur (114) indique que le moteur (50) a fonctionné selon une charge plus importante qu'un seuil prédéfini pendant une certaine période temporelle, de telle sorte que le moteur (50) fonctionne sans cylindres désactivés (54) ; et
le module de cylindre(s) (130) est structuré pour fournir une commande de gestion thermique pendant le mode de désactivation de cylindres de combustion pour augmenter la température de gaz d'échappement de moteur, dans lequel la commande de gestion thermique est fournie tandis que la partie de cylindres de combustion est désactivée de telle sorte que la commande de gestion thermique complète le mode de désactivation de cylindres, et dans lequel la commande de gestion thermique inclut au moins une commande parmi le retardement d'une temporisation d'injection, un dosage d'hydrocarbure externe, une post-injection de carburant après l'événement de combustion dans le cylindre, une ouverture de soupape de décharge, une fermeture d'un étrangleur d'admission, une fermeture d'un étrangleur d'échappement et une augmentation d'une vitesse du moteur (50).

2. Système de moteur selon la revendication 1, dans lequel l'état de fonctionnement de moteur inclut une condition de fonctionnement à charge faible, dans lequel la condition de fonctionnement à charge faible indique qu'au moins une valeur parmi un couple moteur et une vitesse de moteur est en-deçà d'un seuil prédéfini.

3. Système de moteur selon la revendication 2, dans lequel la commande de cylindre (132) inclut une augmentation d'un débit d'injection de carburant sur seulement une partie activée des cylindres de combustion (52).

4. Système de moteur selon la revendication 3, dans lequel l'augmentation du débit d'injection de carburant est telle qu'une sortie de couple moteur reste constante à partir d'une période temporelle qui précède immédiatement la requête de désactivation et pendant laquelle aucun cylindre de combustion (52) n'a été désactivé.

5. Système de moteur selon la revendication 1, dans lequel le module de cylindre(s) inclut un élément de temporisation, dans lequel l'élément de temporisation est structuré pour commander la commutation entre des cylindres de combustion activés et désactivés (53, 54) pendant un mode de désactivation de cylindres de combustion de telle sorte que tous les cylindres de combustion (52) présentent une usure uniforme.

6. Système de moteur selon la revendication 5, dans lequel l'élément de temporisation commande la commutation entre les cylindres de combustion activés et désactivés (53, 54) sur la base d'une certaine période temporelle.

7. Système de moteur selon la revendication 1, dans lequel la certaine période temporelle pour l'état de fonctionnement de moteur existant est d'au moins zéro seconde ou d'approximativement trente secondes.

8. Système de moteur selon la revendication 1, dans lequel la commande de cylindre (132) inclut une augmentation d'un débit d'injection de carburant sur seulement une partie activée des cylindres de combustion (53).

9. Système de moteur selon la revendication 8, dans lequel l'augmentation du débit d'injection de carburant est le double d'un débit qui a été assuré pendant une période temporelle qui précède immédiatement la requête de désactivation et pendant laquelle aucun cylindre de combustion (50) n'a été désactivé.

10. Système de moteur selon la revendication 1 dans lequel la pluralité de cylindres de combustion (52) sont agencés dans une formation en v, dans lequel, pendant un mode de désactivation, la requête de cylindre (122) est structurée pour désactiver une rangée de cylindres de combustion (53) pendant une certaine période temporelle.

11. Procédé (500) comprenant le fonctionnement du système de moteur selon l'une quelconque des revendications 1 à 10 pour modifier la température et la teneur en hydrocarbure d'un flux de gaz d'échappement.

12. Procédé selon la revendication 11, dans lequel l'état de fonctionnement de moteur inclut une condition de fonctionnement à charge faible, dans lequel la condition de fonctionnement à charge faible indique qu'une charge sur le moteur (50) est en deçà d'un seuil prédéfini.

13. Procédé selon la revendication 11, dans lequel la certaine période temporelle est de trente secondes.

14. Procédé selon la revendication 11, dans lequel la commande de cylindre (132) inclut une augmentation d'un débit d'injection de carburant sur seulement une partie activée des cylindres de combustion (54).

15. Procédé selon la revendication 14, dans lequel l'augmentation du débit d'injection de carburant est le double d'un débit qui a été assuré pendant une période temporelle qui précède immédiatement la requête de désactivation et pendant laquelle aucun cylindre de combustion (52) n'a été désactivé.
